Europäisches Patentamt

European Patent Office

Office européen des brevets

(11) Veröffentlichungsnummer: **0 467 037 A2**

## (12) EUROPÄISCHE PATENTANMELDUNG

(21) Anmeldenummer: **91107927.5**

(22) Anmeldetag: **16.05.91**

(51) Int. Cl.5: **B29C 65/02**, B29C 65/20, B29C 65/30

(30) Priorität: **28.06.90 DE 4020704**

(43) Veröffentlichungstag der Anmeldung:
**22.01.92 Patentblatt 92/04**

(84) Benannte Vertragsstaaten:
**CH FR GB IT LI**

(71) Anmelder: **G.M. PFAFF
AKTIENGESELLSCHAFT
Königstrasse 154
W-6750 Kaiserslautern(DE)**

(72) Erfinder: **Becker, Dietmar
Karl-Pfaff-Siedlung 63**
W-6750 Kaiserslautern(DE)
Erfinder: **Herzer, Karl-Christoph
Gasstrasse 14**
W-6750 Kaiserslautern(DE)
Erfinder: **Reinheimer, Paul
Weberstrasse 16**
W-6795 Kindsbach(DE)
Erfinder: **Richter, Roland
Casimirring 78**
W-6750 Kaiserslautern(DE)

(74) Vertreter: **Klein, Friedrich
Königstrasse 154**
W-6750 Kaiserslautern(DE)

(54) Verfahren und Vorrichtung zur Durchführung eines Schweissvorganges bei thermoplastischen Materialbahnen.

(57) Bei einem Verfahren und einer Vorrichtung zur Durchführung eines Schweißvorganges bei thermoplastischen Materialbahnen ist die Temperaturregelung des Schweißwerkzeuges (5) mit der Vorschubregelung der Schweißmaschine derart verknüpft, daß beim Über- oder Unterschreiten des Schweißtemperatur-Istwertes $T_i$ über bzw. unter den entsprechenden Grenzwert $T_{vo}$ bzw. $T_{vu}$ eines bevorzugten Temperaturbereiches $B_v$ der Sollwert $V_s$ der Vorschubgeschwindigkeit in entsprechender Weise verändert wird.

Fig. 9

Fig.6

Die Erfindung betrifft ein Verfahren und eine Maschine nach dem Oberbegriff des Anspruches 1 und 14.

Durch die DE-OS 35 33 338 ist ein Schweißgerät zum Verbinden von Folienbahnen bekannt, das eine Heizeinrichtung und zwei durch je einen eigenen Motor antreibbare Druckrollen aufweist, die eine relativ zu den Folienbahnen erfolgende Vorschubbewegung des Schweißgerätes bewirken. Zur Erzielung eines Synchronlaufes der beiden Druckrollen werden die Motoren durch eine Regeleinrichtung in der Weise betrieben, daß die Drehzahl des einen Motors über einen Sollwertgeber bestimmt wird, während die Drehzahl des anderen Motors über eine zweite Regelschleife der Drehzahl des ersten Motors nachgeführt wird, wobei dieser als Leitmotor dient. Ferner wird auch die Heizeinrichtung mit einer Regeleinrichtung betrieben, wobei die gewünschte Schweißtemperatur über einen Sollwertgeber eingestellt wird.

Wenn mit einem solchen Schweißgerät im Freien verlegte Folienbahnen verschweißt werden sollen, die z. B. zum Auskleiden von Mülldeponien bestimmt sind, so wird die Bedienungsperson am Schweißgerät die Sollwerte der Schweißtemperatur und der Vorschubgeschwindigkeit unter Berücksichtigung der Beschaffenheit der Folienbahnen, d. h. in Abhängigkeit von der Materialart und -dicke sowie auch unter Berücksichtigung der Umgebungsbedingungen einstellen. Die u. a. von der Lufttemperatur, der Stärke der ggf. vorhandenen Sonneneinstrahlung und der Bodenbeschaffenheit abhängigen Umgebungsbedingungen beeinflussen den Schweißprozeß insofern, als hiervon die Ausgangstemperatur der Folienbahnen abhängt. Die Folientemperatur stellt das Ausgangstemperaturniveau beim Beginn der Wärmeübertragung dar. Niedrigere Folientemperatur bedeutet dabei größerer Wärmefluß in die Folie, die dann im Schweißspalt, wo sie zum Aufschmelzen notwendig ist, nicht mehr zur Verfügung steht. Dies ist jedoch über eine höhere Schweißtemperatur des Schweißwerkzeuges und eine niedrigere Vorschubgeschwindigkeit zu kompensieren.

Solange die Umgebungsbedingungen und damit die Ausgangstemperatur der Folienbahnen konstant bleiben, kann mit den einmal eingestellten und anhand von Probeschweißungen überprüften Schweißparametern, d. h. mit den eingestellten Sollwerten der Schweißtemperatur und der Vorschubgeschwindigkeit ein gleichbleibendes Schweißergebnis und eine konstante Nahtqualität sichergestellt werden.

Häufig schwankt jedoch die Ausgangstemperatur der Folienbahnen im Verlauf der Herstellung der bis zu 100 m langen Schweißnähte sehr stark, was u. a. dadurch bedingt sein kann, daß ein Teil der Folienbahnen im Schatten liegt und der übrige Teil direkt der Sonnenbestrahlung ausgesetzt ist oder daß die Folienbahnen stellenweise auf feuchtem Untergrund liegen bzw. der Untergrund unterschiedlich wärmeleitfähig ist. Bei großen Schwankungen der Ausgangstemperatur der Folienbahnen kann es passieren, daß die Regeleinrichtung für die Schweißtemperatur vorübergehend nicht in der Lage ist, die Schweißtemperatur des Schweißwerkzeuges innerhalb des für die Erzielung einer einwandfreien Verschweißung erforderlichen Temperaturbereiches zu halten, so daß die Temperatur im Schweißspalt auf einen zu niedrigen Wert absinkt. Sofern in diesem Fall die Bedienungsperson nicht rechtzeitig die Vorschubgeschwindigkeit durch Verändern des Vorschubsollwertes anpaßt, kann es Fehlerstellen in der Schweißnaht, zumindest aber eine wechselnde Nahtqualität geben.

Der Erfindung liegt daher die Aufgabe zugrunde, ein Verfahren und eine Vorrichtung zur Durchführung eines Schweißvorganges zu schaffen, mit dem bzw. mit der unterschiedliche Ausgangstemperaturen aufweisende Materialbahnen mit im wesentlichen konstanter Schweißspalttemperatur automatisch verarbeitet werden können. Die Aufgabe wird durch die kennzeichnenden Merkmale der Ansprüche 1 und 14 gelöst.

Durch die erfindungsgemäße signalmäßige Verbindung der Temperaturregelung mit der Geschwindigkeitsregelung, wobei der Istwert $T_i$ der Schweißtemperatur $T$ zur Bildung einer Führungsgröße für die Geschwindigkeitsregelung verwendet wird, besteht die Möglichkeit, bei Änderung der Umgebungsbedingungen und damit der Ausgangstemperatur $T_o$ der Materialbahnen nicht nur die Schweißtemperatur $T$ in Abhängigkeit von der Regeldifferenz zwischen dem Istwert $T_i$ und dem Sollwert $T_s$ der Schweißtemperatur $T$, sondern auch die Geschwindigkeit , d. h. die Vorschubgeschwindigkeit der sich relativ zu den Materialbahnen bewegenden Schweißmaschine automatisch an die geänderten Umgebungsbedingungen anzupassen, so daß bei einer sprunghaften großen Veränderung der Ausgangstemperatur $T_o$ der Materialbahnen sowohl durch Verändern der Temperatur des Heizmediums der Schweißmaschine als auch durch entsprechendes Verstellen der Vorschubgeschwindigkeit ein sehr rasches und wirkungsvolles Anpassen des Betriebszustandes der Schweißmaschine an die neuen Umgebungsbedingungen erzielbar ist, wodurch die Forderung nach Konstanthaltung der im Schweißspalt herrschenden Temperatur erfüllt und der Schweißvorgang ohne Unterbrechung weitergeführt werden kann.

Die Weiterentwicklung des erfindungsgemäßen Verfahrens gemäß Anspruch 2, wonach die Vorschubgeschwindigkeit erst dann verändert wird, wenn der Istwert $T_i$ der Schweißtemperatur $T$ den oberen oder unteren Grenzwert eines beiderseits des Sollwertes Ts festgelegten bevorzugten Temperaturbereiches Bv über- oder unterschreitet, bringt den Vorteil, daß die Schweißmaschine so lange wie möglich mit konstanter Vorschubgeschwindigkeit bewegt wird, was beim Schweißen von stationären Materialbahnen der Bedienungsperson das Führen der Schweißmaschine erheblich erleichtert.

Die im Anspruch 3 angegebene Verknüpfung der beiden Regelkreise durch ein in einem Rechner algorithmisch oder tabellarisch realisiertes Kennfeld ermöglicht es, durch Eingabe verschiedener für das Schweißergebnis relevanter Parameter, zumindest aber des Wertes bzw. eines Mittelwertes der Ausgangstemperatur To der Materialbahnen vor Schweißbeginn dafür zu sorgen, die Größe des Sollwertes Ts der Schweißtemperatur und des Sollwertes Vs der Vorschubgeschwindigkeit in Abhängigkeit von den aktuellen Werten der Parameter so festzulegen, daß im Bereich der Schweißnaht auftretende Schwankungen der Ausgangstemperatur To der Materialbahnen möglichst allein über die Temperaturregelung bei konstanter Vorschubgeschwindigkeit ausgeregelt werden und nur bei großen Temperatursprüngen auch die Vorschubgeschwindigkeit verändert wird.

Durch die Maßnahme nach Anspruch 4, wonach die als Regelgröße dienende Schweißtemperatur T von der Temperatur des Heizelementes des Schweißwerkzeuges gebildet wird, läßt sich die Schweißtemperatur T auf verhältnismäßig einfache und dabei sichere Weise erfassen, indem der Temperaturfühler innerhalb des Heizelementes des Schweißwerkzeuges geschützt angeordnet und das Anschlußkabel des Temperaturfühlers gemeinsam mit dem Anschlußkabel des Heizelementes gegen mechanische Beschädigungen gesichert werden kann.

Da also die Schweißtemperatur T nicht im Schweißspalt, sondern am Heizelement des Schweißwerkzeuges gemessen wird, wirkt sich z. B. ein durch einen kälteren Abschnitt der Materialbahnen ausgelöstes Absinken der Schweißspalttemperatur erst nach einer von der Wärmeleitfähigkeit des Schweißwerkzeuges beeinflußten Zeitverzögerung am Heizelement des Schweißwerkzeuges aus, so daß die Temperaturregelung erst ab diesem Zeitpunkt auf den erhöhten Wärmeabfluß in die Material bahnen bzw. den gestiegenen Wärmebedarf im Schweißspalt reagieren kann. In einer ersten einfachen Ausbaustufe des Schweißverfahrens wird die durch die zeitverzögerte Meßwertbildung bedingte Totzeit im Regelkreis in Kauf genommen, wobei zu erwarten ist, daß bei nicht allzu großen sprunghaften Änderungen der Ausgangstemperatur To der Materialbahnen nach dem Erkennen der Temperaturveränderung am Heizelement noch genügend Zeit zur Verfügung steht, um die Regeldifferenz allein durch Veränderung der Heizleistung auszugleichen.

Durch die Maßnahme nach Anspruch 5 läßt sich die Totzeit im Regelkreis etwas kompensieren, indem fortwährend der Gradient der Schweißtemperatur T ermittelt, d. h. der Trend des Temperaturverlaufes beobachtet wird. Hierbei wird der Temperaturgradient des letzten Meßwertes oder von mehreren Meßwerten berechnet und als Entscheidungskriterium verwendet, wie stark für den nächsten Schweißabschnitt die Heizung und ggf. der Vorschub verändert werden muß, damit sich der Istwert Ti der Schweißtemperatur T möglichst rasch wieder dem Sollwert Ts nähert.

Eine sehr viel feinfühligere Reaktion der Temperaturregelung läßt sich durch die Maßnahme nach Anspruch 6 erreichen, indem in einem bestimmten Abstand vor der Schweißstelle die jeweilige Ausgangstemperatur To der Materialbahnen gemessen wird und die Meßwerte sodann dem dem Kennfeld zugeordneten Rechner zugeführt werden. Hierdurch besteht die Möglichkeit, daß der Rechner z. B. bei einer sprunghaften Verringerung der Ausgangstemperatur To der Materialbahnen schon vorab den Sollwert Ts der Schweißtemperatur T an den bevorstehend erhöhten Wärmebedarf im Schweißspalt anpassen kann. Dies hat zur Folge, daß der Regler bestrebt ist, die auf diese Weise geschaffene Regeldifferenz auszugleichen, indem die Stellgröße entsprechend geändert und dem Heizelement mehr Energie zugeführt wird. In Abhängigkeit von der Höhe der Differenz zwischen den aktuellen und den zuvor ermittelten Meßwerten der Ausgangstemperatur To und der Höhe der Vorschubgeschwindigkeit lassen sich der Zeitpunkt und das Ausmaß der Anhebung der Heizleistung so einstellen, daß der erhöhte Wärmebedarf im Schweißspalt ohne Zeitverzögerung sofort gedeckt wird, so daß es erst gar nicht zu einem nennenswerten Absinken der Schweißspalttemperatur kommt.

Durch die Maßnahme nach Anspruch 7 erfolgt ein weiterer Schritt zur vollständigen Automatisierung des Schweißvorganges.

Beim Überlapptschweißen von im Freien verlegten Materialbahnen kann es unter ungünstigen Umständen im Überlappungsbereich der Materialbahnen beispielsweise dann zu erheblichen Unterschieden in der Ausgangstemperatur To des oberen und unteren Bahnabschnittes kommen, wenn der oben liegende Bahnabschnitt sonnenbeschienen ist und der darunter liegende Bahnabschnitt auf naßkaltem Boden aufliegt. Das Verfahren gemäß Anspruch 8 ermöglicht es, daß auch in diesem Fall jedem Bahnabschnitt genau diejenige Wärmemenge zugeführt wird, die zur Erzielung einer für eine einwandfreie Nahtqualität erforderlichen gleichbleibend tiefen Aufschmelzzone eines jeden der beiden Bahnabschnitte im Schweißspalt notwendig ist.

Eine noch weitergehende Verfeinerung des Schweißverfahrens läßt sich gemäß Anspruch 9 dadurch erzielen, daß zusätzlich zur Regelung der Schweißtemperatur und der Geschwindigkeitsregelung eine Änderung der wirksamen Größe der Kontaktfläche des Schweißwerkzeuges durchgeführt wird, indem beispielsweise gemäß Anspruch 10 die Materialbahnen nur einen Teil oder die gesamte zugeordnete Fläche des Schweißwerkzeuges berühren. Eine andere Möglichkeit besteht gemäß Anspruch 11 darin, daß entweder nur ein Teil des Schweißwerkzeuges oder das gesamte Schweißwerkzeug beheizt wird, wobei die Größe der wirksamen Fläche des Schweißwerkzeuges durch die Größe der beheizten Fläche bestimmt wird.

Eine alternative Möglichkeit zur Verfeinerung des Schweißverfahrens besteht nach Anspruch 12 darin, dem Schweißwerkzeug einen variabel beheizbaren Vorwärmer vorzuschalten, bei dem es sich beispielsweise um einen Heizschuh oder ein Heißluftgebläse handeln kann.

Durch die Maßnahme, zusätzlich zur Schweißtemperatur- und Geschwindigkeitsregelung noch eine Änderung der wirksamen Kontaktfläche des Schweißwerkzeuges oder eines vorgeschalteten Vorwärmers durchzuführen, kann nicht nur feinfühliger, sondern prinzipiell auch schneller auf eine sprunghafte Vergrößerung der Regeldifferenz reagiert werden, so daß eine verbesserte Möglichkeit besteht, auch beim Auftreten großer Unterschiede in der Ausgangstemperatur To der Materialbahnen, den Istwert Ti der Schweißtemperatur T innerhalb des bevorzugten Temperaturbereiches Bv zu halten, wodurch eine Veränderung der Vorschubgeschwindigkeit V nur noch bei extremer sprunghafter Vergrößerung der Regeldifferenz durchgeführt werden muß.

Bezüglich des Zeitverhaltens der Regelung ist das Verfahren nach Anspruch 10 von besonderem Vorteil, da sich die Veränderung der wirksamen Größe der Kontaktfläche des Schweißwerkzeuges durch ein teilweises oder vollständiges Andrücken der Materialbahnen an das Schweißwerkzeug besonders rasch durchführen läßt. Durch voneinander unabhängiges Beaufschlagen der für das Andrücken der Materialbahnen verwendeten Andruckmittel kann nicht nur auf relativ einfache Art bei unterschiedlichen Ausgangstemperaturen To der sich überlappenden Bahnabschnitte diesen die jeweils erforderliche unterschiedliche Wärmemenge zugeführt werden, sondern es kann zugleich auch ohne nennenswerte Zeitverzögerung auf Veränderungen der Ausgangstemperatur To einer der beiden überlappenden Bahnabschnitte reagiert werden.

Anspruch 13 schlägt alternativ zu dem bisher beschriebenen Verfahren vor, auf eine Verknüpfung der Temperaturregelung mit der Geschwindigkeitsregelung zu verzichten und die Temperaturregelung allein durch eine von der Regeldifferenz zwischen dem Istwert Ti der Schweißtemperatur T und deren Sollwert Ts abhängige Veränderung der Kontaktfläche des Schweißwerkzeuges mit den Materialbahnen zu unterstützen. In diesem Fall wird ein Schweißvorgang stets mit der vor Schweißbeginn festgelegten Vorschubgeschwindigkeit durchgeführt, was der Bedienungsperson das Führen der Schweißmaschine noch mehr erleichtert.

In den Ansprüchen 14 bis 20 sind vorteilhafte vorrichtungsmäßige Ausgestaltungen der für die Durchführung des Schweißverfahrens dienenden Schweißmaschine angegeben.

Die Erfindung ist anhand mehrerer in der Zeichnung dargestellter Ausführungsbeispiele erläutert. Es zeigen:

Fig. 1    eine Seitenansicht einer Schweißmaschine;

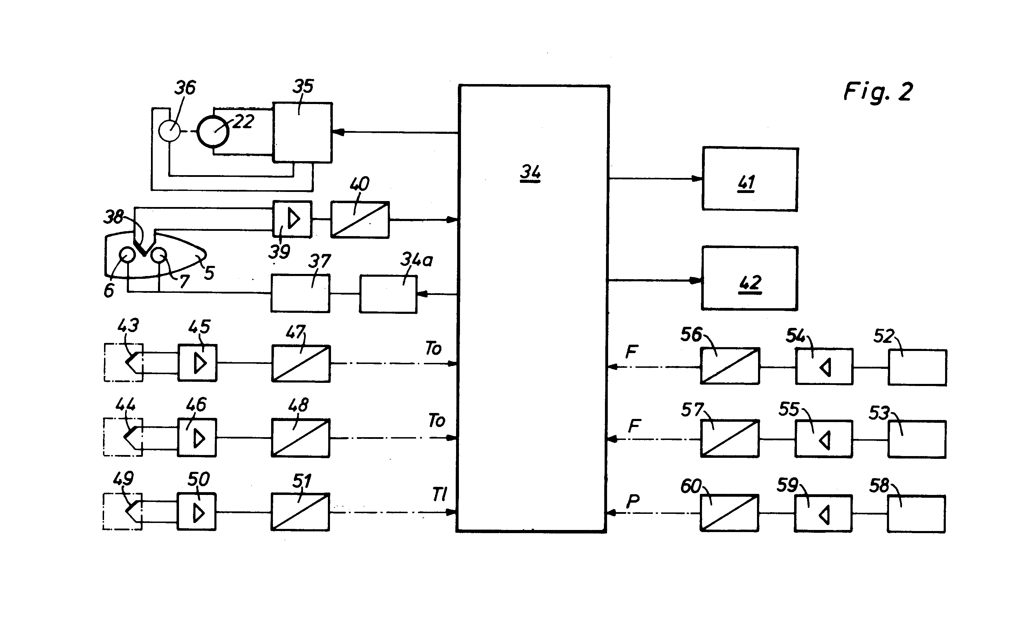

Fig. 2    ein Blockschaltbild des gesamten Regelungssystems;

Fig.3    den Heizkeil und die diesem zugeordneten Andruckmechanismen eines zweiten Ausführungsbeispieles;

Fig. 4    den Heizkeil eines dritten Ausführungsbeispieles mit einem dem Heizkeil zugeordneten Vorwärmer;

Fig. 5    den Heizkeil eines vierten Ausführungsbeispieles;

Fig. 6    ein Blockschaltbild über den Funktionsablauf der Temperatur- und der Geschwindigkeitsregelung;

Fig. 7    ein Blockschaltbild über den Funktionsablauf der Temperatur- und der Geschwindigkeitsregelung unter Berücksichtigung der Ausgangstemperatur To der Materialbahnen;

Fig. 8    ein Blockschaltbild ähnlich wie in Fig. 7, bei dem eine zusätzliche Anpassung der Wärmeübertragungsverhältnisse vorgenommen wird;

Fig. 9    ein Diagramm über die Abhängigkeit der Vorschubregelung vom Temperatur-Istwert Ti

Fig. 10    ein Diagramm ähnlich wie in Fig. 9, bei dem unterschiedliche Ausgangstemperaturen To der Materialbahnen als Parameter berücksichtigt sind;

Fig. 11    ein Diagramm über einen beispielweisen Verlauf des Temperatur-Istwertes Ti und des Vorschubwertes V über der Zeit und

Fig. 12    ein Diagramm über einen beispielsweisen Verlauf des Temperatur-Istwertes, der Änderung der Wärmeübertragungsverhältnisse und des Vorschubwertes V über der Zeit.

Die Schweißmaschine entspricht hinsichtlich ihres mechanischen Aufbaues im wesentlichen der Schweißvorrichtung aus dem DE-GM 88 05 783. Die Schweißmaschine hat demgemäß ein strichpunktiert dargestelltes Gehäuse 1, an dessem in Vorschubrichtung V hinteren Ende eine frei drehbare Laufwalze 2 und an dessem vorderen Ende zwei einen gegenseitigen Abstand aufweisende angetriebene Laufrollen 3 angeordnet sind. Am Gehäuse 1 ist ein nur teilweise dargestellter Handbügel 4 angeordnet, mit dessen Hilfe die Bedienungsperson die Schweißmaschine handhaben kann.

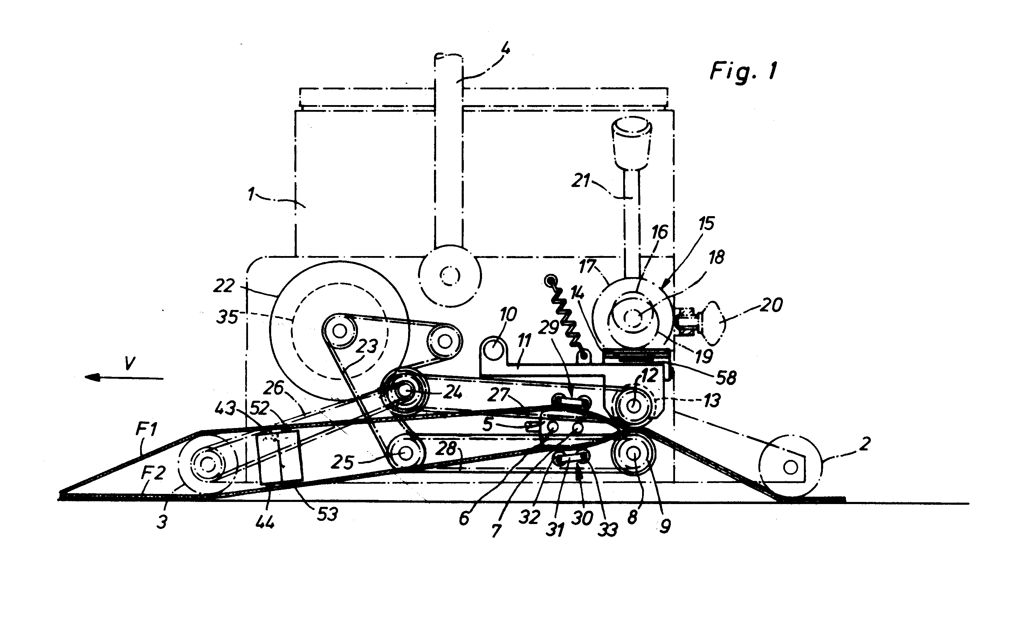

Die Schweißmaschine enthält als Schweißwerkzeug einen Heizkeil 5, der mit Hilfe eines nicht dargestellten, durch das DE-GM 88 05 783 bekannten Mechanismus zwischen der in Fig. 1 dargestellten Arbeitsstellung und einer von dieser entfernten Ruhestellung hin- und herbewegbar ist. Der Heizkeil 5 enthält bei diesem Ausführungsbeispiel zwei quer zur Vorschubrichtung V verlaufende, elektrisch betriebene Heizpatronen 6, 7.

Auf einer im Gehäuse 1 gelagerten Welle 8 ist eine Druckrolle 9 befestigt. Auf einem im Gehäuse 1 befestigten Bolzen 10 ist ein Schwenkrahmen 11 gelagert. In dem Schwenkrahmen 11 ist eine Welle 12 aufgenommen, die eine drehfest angeordnete Druckrolle 13 trägt. Auf dem Schwenkrahmen 11 ist ein Blattfederpaket 14 angeordnet. Am Gehäuse 1 ist ein nur schematisch dargestellter, jedoch im DE-GM 88 05 783 ausführlich beschriebener Andruckmechanismus 15 angeordnet, der eine erste Exzenterwelle 16, einen mit dieser verbundenen Flansch 17, eine in der ersten Exzenterwelle 16 drehbar gelagerte zweite Exzenterwelle 18 und eine an diesem exzentrisch angeordnete Andruckrolle 19 aufweist, die sich auf dem Blattfederpaket 14 abstützt. Nach Lösen einer die Drehlage des Flansches 17 sichernden Klemmschraube 20 läßt sich mit Hilfe eines Hebels 21 die Exzenterwelle 16 gemeinsam mit der Exzenterwelle 18 verdrehen und damit eine Grundeinstellung der Spalthöhe zwischen den beiden Druckrollen 9 und 13 vornehmen. Bei festgeklemmtem Flansch 17 wird durch den Hebel 21 nur die innere Exzenterwelle 18 verdreht und dabei der erforderliche Anpreßdruck der Druckrollen 9, 13 eingestellt.

Am Gehäuse 1 ist ein regelbarer Gleichstrommotor 22 angeordnet, der über einen Kettentrieb 23 zwei Wellen 24, 25 antreibt. Über die Welle 24 wird ein zum Antrieb der beiden Laufrollen 3 dienender Kettentrieb 26 angetrieben. Die Welle 24 steht ferner über einen Kettentrieb 27 mit der die obere Druckrolle 13 tragenden Welle 12 in Antriebsverbindung. In gleicher Weise steht die Welle 25 über einen Kettentrieb 28 mit der die untere Druckrolle 9 tragenden Welle 8 in Antriebsverbindung. Die Kettentriebe 26, 27 und 28 sind in der Weise aufeinander abgestimmt, daß die von ihnen angetriebenen Laufrollen 3 und Druckrollen 9, 13 dieselbe Umfangsgeschwindigkeit haben.

Dem in der Arbeitsstellung befindlichen Heizkeil 5 sind ein oberer und ein unterer Andruckmechanismus 29 bzw. 30 zugeordnet. Die beiden Andruckmechanismen 29, 30 sind identisch aufgebaut und bestehen aus einem federbelasteten, quer zur Längsachse des Heizkeiles 5 bewegbaren Träger 31 und einer vorderen und einer hinteren frei drehbaren Andruckrolle 32 bzw. 33.

Zum Betrieb der Schweißmaschine ist ein Rechner 34 vorgesehen, mit dessen Hilfe die nachfolgend genannten Regelkreise realisiert bzw. miteinander verknüpft sind. Dem Motor 22 ist ein mit einer Endstufe versehener Drehzahlregler 35 zugeordnet, wobei der Istwert der Drehzahl, der zugleich den Istwert Vi der Vorschubgeschwindigkeit V der Schweißmaschine bildet, durch einen mit dem Motor 22 gekoppelten Tachogenerator 36 ermittelt wird. Ein nicht näher definierter Teil des Rechners 34 bildet für den Heizkeil 5 bzw. den in ihm angeordneten Heizpatronen 6, 7 einen Temperaturregler 34a. Der in der Zeichnung als Blocksymbol dargestellte Temperaturregler 34a ist über ein von einem Halbleiterrelais gebildetes Stellglied 37 mit den Heizpatronen 6, 7 verbunden. Zur Ermittlung des Istwertes Ti der Schweißtemperatur T ist innerhalb einer oder beider Heizpatronen 6, 7 ein Thermofühler 38 angeordnet.

Der Drehzahlregler 35 ist zum Empfang eines Vorschub-Sollwertes Vs mit einem Ausgang des Rechners 34 verbunden. Der Thermofühler 38 ist über einen Verstärker 39 und einen A/D-Wandler 40 mit einem Eingang des Rechners 34 verbunden. An den Rechner 34 sind ferner eine Tastatur 41 und ein Display 42 angeschlossen.

In einer weitergehenden Ausbaustufe sind zur Erfassung der Ausgangstemperatur To der miteinander zu verschweißenden Materialbahnen, bei denen es sich beispielsweise um Folienbahnen F1, F2 handelt, zwei in Fig. 1 dargestellte, im Gehäuse 1 angeordnete Thermofühler 43, 44 vorgesehen, die über je einen Verstärker 45, 46 und einen A/D-Wandler 47, 48 mit entsprechenden Eingängen des Rechners 34 verbunden sind. Desweiteren kann zur Ermittlung der Lufttemperatur Tl ein weiterer Thermofühler 49 vorgesehen werden, der über einen Verstärker 50 und einen A/D-Wandler 51 an einen Eingang des Rechners 34 angeschlossen ist.

Ein weiterer wichtiger Parameter bei der Bestimmung der für die Erzielung eines einwandfreien Schweißergebnisses erforderlichen Wärmemenge ist der Feuchtigkeitsgrad F der Innenseiten der sich überlappenden Bahnabschnitte. Zur Ermittlung des Feuchtigkeitsgrades F sind daher im Gehäuse 1 zwei Feuchtigkeitssensoren 52, 53 angeordnet, die über je einen Verstärker 54, 55 und einen A/D-Wandler 56, 57 mit entsprechenden Eingängen des Rechners 34 verbunden sind.

Schließlich ist zur Messung des Anpreßdruckes der Druckrollen 9, 13 auf die überlappenden Bahnabschnitte am Blattfederpaket 14 ein von einem Dehnungsmeßstreifen gebildeter Drucksensor 58 angeordnet, der über einen Verstärker 59 und einen A/D-Wandler 60 an einen Eingang des Rechners 34 angeschlossen ist.

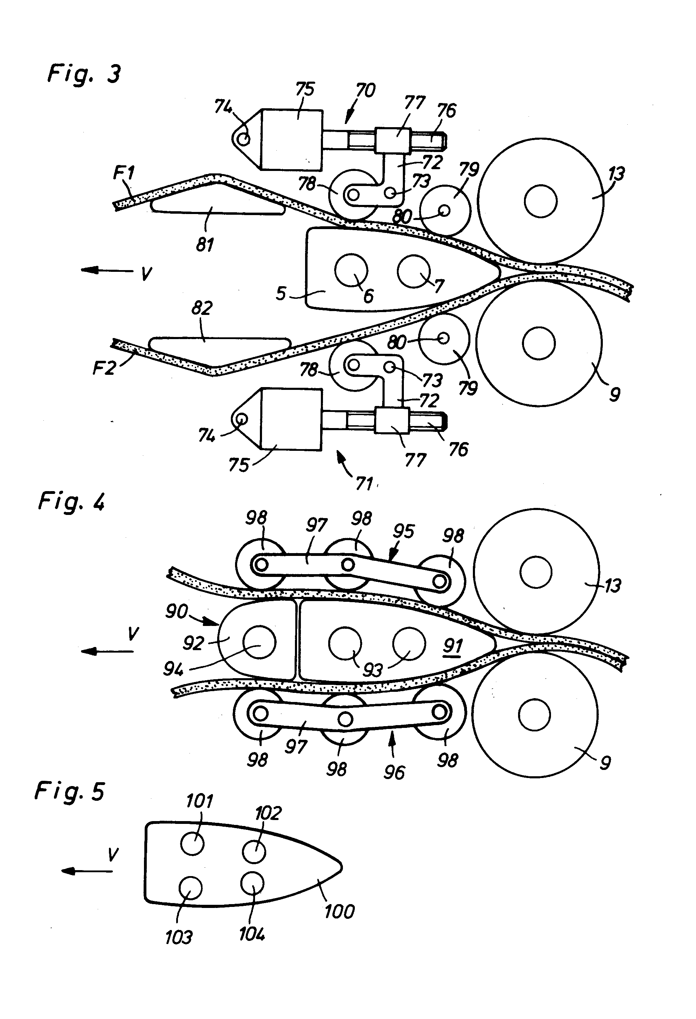

Bei einem in Fig. 3 vereinfacht dargestellten zweiten Ausführungsbeispiel sind dem Heizkeil 5, der dem in Fig. 1 gezeigten Heizkeil 5 entspricht und daher mit dem gleichen Bezugszeichen versehen wurde, ein oberer und ein unterer, jeweils identisch aufgebauter Andruckmechansimus 70, 71 zugeordnet. Jeder Andruckmechanismus 70, 71 weist einen Winkelhebel 72 auf, der auf einem auf nicht näher dargestellte Weise am Gehäuse 1 befestigten Bolzen 73 gelagert ist. Auf einem auf nicht näher dargestellte Weise am Gehäuse 1 befestigten Bolzen 74 ist ein Schrittmotor 75 schwenkbar angeordnet. Der Schrittmotor 75 treibt eine Gewindespindel 76 an, die mit einer am einen Ende des Winkelhebels 72 befestigen Gewindehülse 77 zusammenwirkt. Am anderen Ende des Winkelhebels 72 ist eine frei drehbare Andruckrolle 78 angeordnet.

Jeder Andruckmechanismus 70, 71 weist ferner eine weitere Andruckrolle 79 auf, die auf einem auf nicht näher dargestellte Weise am Gehäuse 1 befestigten Bolzen 80 frei drehbar gelagert ist.

Den beiden Andruckmechanismen 70, 71 ist je eine Gleitkufe 81 bzw. 82 für die Folienbahnen F1, F2 zugeordnet. Der gegenseitige Abstand der Gleitkufen 81, 82 ist so gewählt, daß die sich überlappenden Folienabschnitte unter einem vergleichsweise steilen Winkel dem Heizkeil 5 zugeführt werden und nur durch die beiden Andruckmechansimen 70, 71 in vollflächiger Anlage am Heizkeil 5 gehalten werden können.

Bei dem in Fig. 4 dargestellten dritten Ausführungsbeispiel besteht das Schweißwerkzeug 90 aus einem Heizkeil 91 und einem diesem vorgelagerten Vorwärmer 92, der gemeinsam mit dem Heizkeil 91 zwischen der in der Zeichnung dargestellten, den Druckrollen 9, 13 benachbarten Arbeitsstellung und einer von diesen entfernten Ruhestellung hin- und herbewegbar ist. Der Heizkeil 91 ist wie der Heizkeil 5 des ersten Ausführungsbeispieles ausgebildet und weist daher zwei quer zur Vorschubrichtung V verlaufende elektrisch heizbare Patronen 93 auf. Der Vorwärmer 92 weist eine quer zur Vorschubrichtung V verlaufende, elektrisch heizbare Patrone 94 auf. Die Heizpatrone 94 ist unabhängig von den Heizpatronen 93 des Heizkeiles 91 beaufschlagbar.

Dem in der Arbeitsstellung befindlichen Heizkeil 91 und Vorwärmer 92 sind ein oberer und ein unterer Andruckmechanismus 95 bzw. 96 zugeordnet. Die beiden Andruckmechanismen 95, 96 sind identisch aufgebaut und bestehen aus einem auf bekannte, nicht näher dargestellte Weise federbelasteten, quer zur Längsachse des Heizkeiles 91 bewegbaren Träger 97 und drei mit gegenseitigem Abstand angeordneten frei drehbaren Andruckrollen 98.

Eine alternative Ausführungsform zu diesem Ausführungsbeispiel könnte darin bestehen, daß der Heizkeil um die Abmessungen des Vorwärmers verlängert und zusätzlich zu den den Heizpatronen 93 vergleichbaren Heizpatronen noch eine dritte, der Heizpatrone 94 vergleichbare vorgelagerte Heizpatrone aufweist, die in gleicher Weise wie die Heizpatrone 94 unabhängig von den beiden anderen Heizpatronen beaufschlagbar wäre.

Bei einem vierten Ausführungsbeispiel unterscheidet sich die Schweißmaschine gegenüber der in Fig. 1 dargestellten Schweißmaschine des ersten Ausführungsbeispieles lediglich in der Ausbildung des Heizkeiles. Der in Fig. 5 dargestellte Heizkeil 100 weist eine obere Reihe von zwei Heizpatronen 101, 102 und eine untere Reihe von zwei Heizpatronen 103, 104 auf. Die obere und untere Reihe der Heizpatronen sind unabhängig voneinander beaufschlagbar.

Funktionsweise:

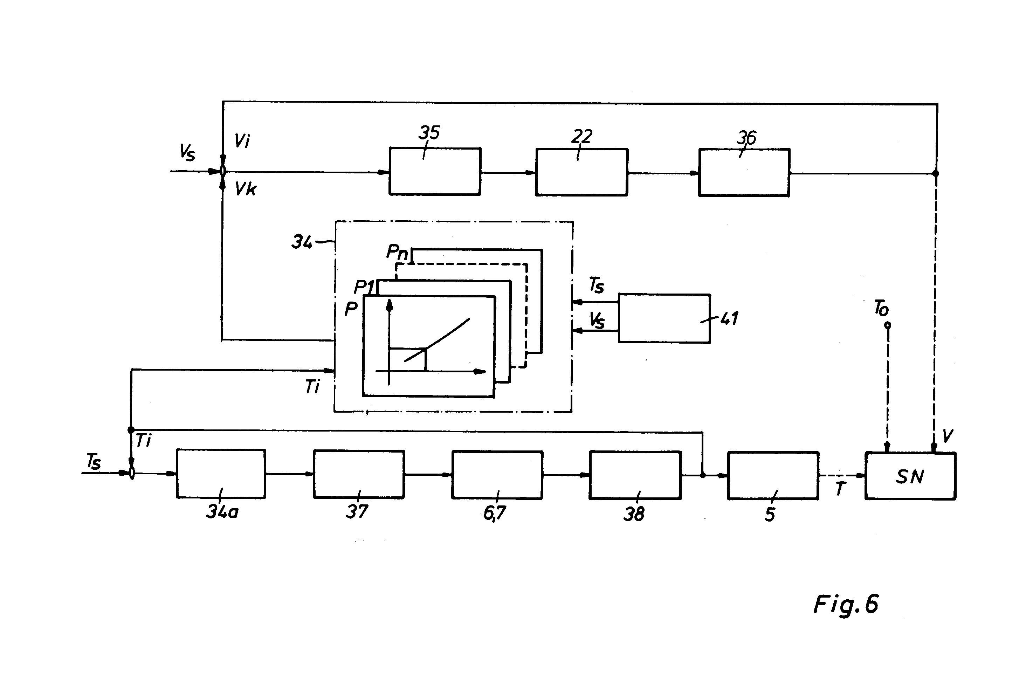

Bei der in Fig. 6 dargestellten ersten Ausbaustufe des Regelungssystems bestimmt die Bedienungsperson entsprechend den aktuellen Parametern, nämlich der Art und Dicke der zu verschweißenden Folienbahnen F1, F2 sowie der Ausgangstemperatur To der Folienbahnen F1, F2 einen geeigneten Sollwert Ts der Schweißtempertatur T und einen hierzu passenden Sollwert Vs der Vorschubgeschwindigkeit V. Die Festlegung der Sollwerte Ts und Vs kann mit Hilfe von Tabellen und/oder anhand von Schweißversuchen erfolgen. Die ausgewählten Sollwerte Ts und Vs werden nun über die Tastatur 41 dem Rechner 34 eingegeben. Über die Tastatur 41 wird dem Rechner 34 ferner die Größe des mit Hilfe des Andruckmechanismus 15 eingestellten Schweißdruckes P mitgeteilt.

Die beiden Regelkreise, d. h. die Temperaturregelung und die Vorschubregelung sind innerhalb des Rechners 34 über ein symbolisch als Diagramm dargestelltes Kennlinienfeld miteinander verknüpft, wobei für verschiedene Werte P1 bis Pn des Schweißdruckes P entsprechende Kennlinien bestehen, die durch Probeschweißungen ermittelt und in einem ROM des Rechners 34 abgelegt sind.

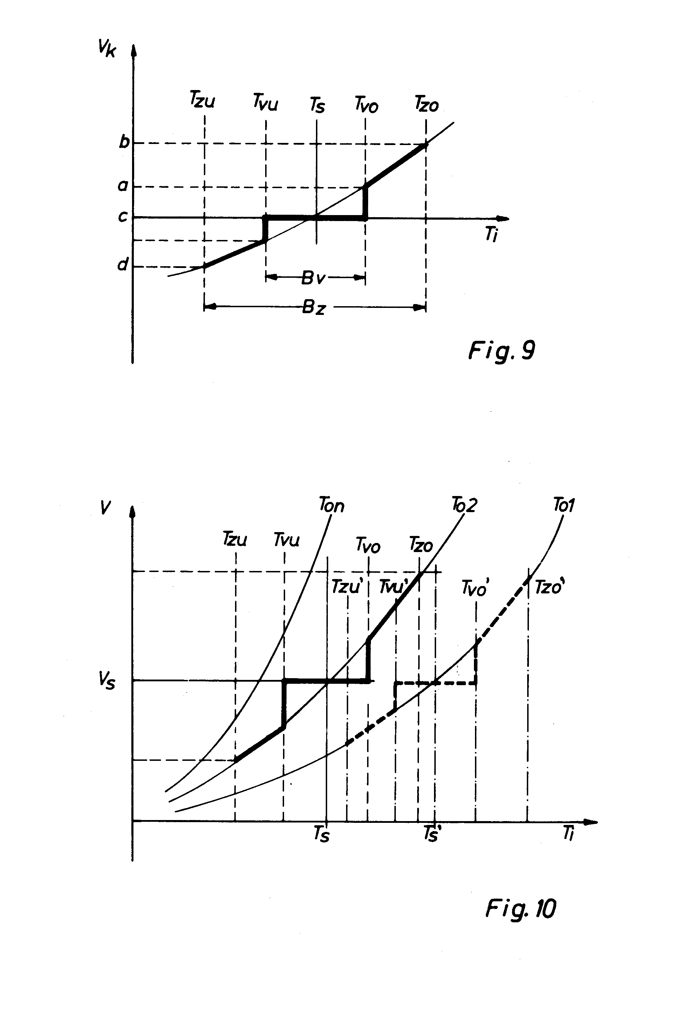

Während des Schweißens wird fortwährend mit Hilfe des Thermofühlers 38 die im Bereich der Heizpatronen 6, 7 des Heizkeiles 5 herrschende Temperatur gemessen, die hierbei den Istwert Ti der Schweißtemperatur T darstellt. Der Istwert Ti wird ständig mit dem vorgegebenen Sollwert Ts verglichen und bei Auftreten einer Regeldifferenez, diese über den Temperaturregler 34a und das zugeordnete Stellglied 37 minimiert bzw. ausgeglichen, indem je nach Größe und Vorzeichen der Regeldifferenz die Heizpatronen 6, 7 mehr oder weniger aufgeheizt werden. Hierbei wird auch bei konstant bleibenden Umgebungsbedingungen, d. h. insbesondere bei gleichbleibender Ausgangstemperatur To der Folienbahnen F1, F2 der Istwert Ti der Schweißtemperatur T aufgrund der Zeitverzögerung zwischen einer Temperaturänderung im Schweißspalt und dem Messen der dadurch bedingten Temperaturänderung an den Heizelementen 6, 7 innerhalb einer verhältnismäßig großen Schwankungsbreite um den Sollwert Ts herum pendeln. Diese bei konstanten Umgebungsbedingungen auftretende Schwankungsbreite muß auf jeden Fall kleiner sein als ein durch den oberen Grenzwert Tvo und den unteren Grenzwert Tvu festgelegter bevorzugter Temperaturbereich Bv (Fig. 9) für die Schweißtemperatur T.

Wenn beim Schweißen beispielsweise ein Wechsel von einem im Schatten liegenden, verhältnismäßig kühlen Folienbereich zu einem sonnenbeschienenen und daher vergleichweise warmen Folienbereich stattfindet und dabei ein größerer Sprung in der Ausgangstemperatur To der Folienbahnen F1, F2 auftritt, so kann es wegen der zeitverzögerten Erfassung der sich im Schweißspalt auswirkenden Temperaturänderung und der dadurch bedingten, durch den Temperaturregler 34a ebenfalls zeitverzögert durchgeführten Verringerung der Heizleistung vorkommen, daß der auf den kühlen Folienbereich und den dort erhöhten Wärmebedarf abgestimmte Heizkeil 5 nach dem Erreichen des erwärmten Folienbereiches einen solch großen Wärmeenergie-Überschuß erzeugt, daß der Istwert Ti der Schweißtemperatur T den Grenzwert Tvo überschreitet. In diesem Fall wird vom Rechner 34 ein Korrekturwert Vk für die Vorschubregelung gebildet, dessen Größe von der Größe des aktuellen Istwertes Ti der Schweißtemperatur T abhängt und gemäß dem Diagramm in Fig. 9 zwischen den Werten a und b liegen kann. Der Korrekturwert Vk bewirkt gemäß Fig. 6 am Summierpunkt der Vorschubregelung eine entsprechende Erhöhung der Führungsgröße für den Drehzahlregler 35.

Die Erhöhung der Führungsgröße für den Drehzahlregler 35 bewirkt eine entsprechende und sich dabei vergleichsweise rasch einstellende Vergrößerung der Vorschubgeschwindigkeit V der Schweißmaschine, wodurch einer Überhitzung der mit dem Heizkeil 5 in Berührung tretenden Folienabschnitte vorgebeugt wird.

Bei einer Änderung der Ausgangstemperatur To der Folienbahnen F1, F2 in entgegengesetzter Richtung - also von einem warmen zu einem kalten Bereich - erfolgt beim Unterschreiten des unteren Grenzwertes Tvu des bevorzugten Temperaturbereiches Bv der daraufhin durchgeführte Regelungsvorgang in umgekehrter Richtung, d. h., der vom Rechner 34 gebildete Korrekturwert Vk, der gemäß Fig. 9 zwischen den Werten c und d liegen kann, führt zu einer Verringerung der Führungsgröße für den Drehzahlregler 35 und damit zu einer Herabsetzung der Vorschubgeschwindigkeit. Dies hat zur Folge, daß jetzt ein erhöhter Wärmeübergang vom noch nicht ausreichend aufgeheizten Heizkeil 5 auf die mit ihm in Berührung tretenden Folienabschnitte erfolgen kann.

Das im Blockschaltbild gemäß Fig. 6 dargestellte, mit SN bezeichnete Blocksymbol kennzeichnet den Einfluß der im Heizkeil 5 gemessenen Schweißtemperatur T, der Vorschubgeschwindigkeit V und der als Störgröße auftretenden Ausgangstemperatur To der Folienbahnen F1, F2 auf die Qualität der Schweißnaht.

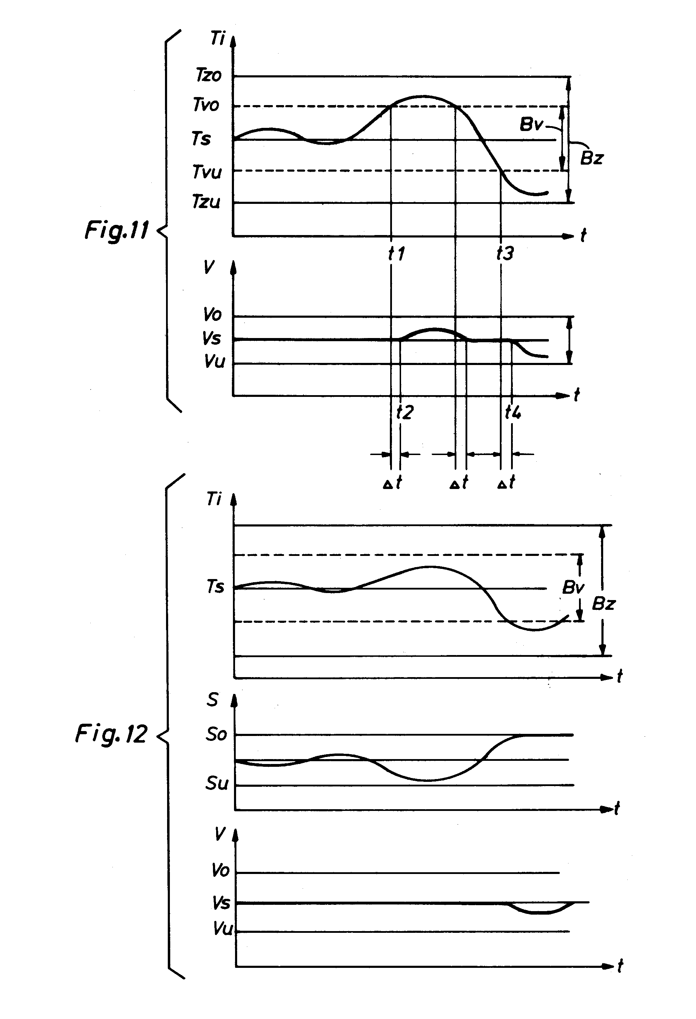

Fig. 11 zeigt an einem beliebigen Beispiel den zeitlichen Verlauf des Istwertes Ti der Schweißtempertur T sowie der Vorschubgeschwindigkeit V. Solange sich der Istwert Ti innerhalb des bevorzugten Temperaturbereiches Bv befindet, wird die Regeldifferenz zwischen Ti und Ts allein durch den Temperaturregler 34a ausgeglichen und es bleibt die Vorschubgeschwindigkeit V der Schweißmaschine unverändert. Erst wenn zum Zeitpunkt t1 der Istwert Ti den oberen Grenzwert Tvo des bevorzugten Temperaturbereiches Bv überschreitet, weil, wie vorstehend beschrieben, die Temperaturregelung einem sprunghaften Anstieg der Ausgangstemperatur To der Folienbahnen F1, F2 nur zeitverzögert folgen kann, oder weil ggf. die obere Grenze des Regelbereiches erreicht ist, wird durch Bildung eines Korrekturwertes Vk für die Vorschubregelung eine Erhöhung der Vorschubgeschwindigkeit V durchgeführt, die mit relativ geringer Zeitverzögerung t bei t2 einsetzt.

Nachdem der Istwert Ti den oberen Grenzwert Tvo wieder unterschritten hat, wird die Korrektur der Vorschubgeschwindigkeit V mit relativ geringer Zeitverzögerung t wieder aufgehoben und die Schweißmaschine mit der ursprünglich ausgewählten Soll-Geschwindigkeit angetrieben.

Wenn wie bei diesem Beispiel der Istwert Ti bei t3 den unteren Grenzwert Tvu des bevorzugten Temperaturbereiches Bv unterschreitet, wird mit geringer Zeitverzögerung t zum Zeitpunkt t4 die Vorschubgeschwindigkeit V herabgesetzt.

Die Größe der Vorschubveränderung richtet sich jeweils nach der Größe der Regeldifferenz zwischen Ti und Ts. Jedoch ist durch Festlegung eines oberen Vorschubgrenzwertes Vo und eines unteren Vorschubgrenzwertes Vu ein Bereich vorgegeben, in welchem sich die Vorschubveränderung abspielen kann.

Übersteigt der Istwert Ti der Schweißtemperatur T den oberen Grenzwert Tzo des noch zulässigen Temperaturbereiches Bz oder unterschreitet er den unteren Grenzwert Tzu dieses Bereiches, so wird der Schweißvorgang abgebrochen, da jenseits des Bereiches Bz keine ausreichende Qualität der Schweißnaht mehr gewährleistet ist.

Durch die fortwährende Ermittlung des Gradienten der Schweißtemperatur T läßt sich der Trend des Temperaturverlaufes beobachten und mit Hilfe des Rechners 34 berechnen, wie stark die Heizung und ggf. die Vorschubgeschwindigkeit verändert werden muß, damit sich der Istwert Ti möglichst schnell wieder dem Sollwert Ts der Schweißtemperatur T nähert.

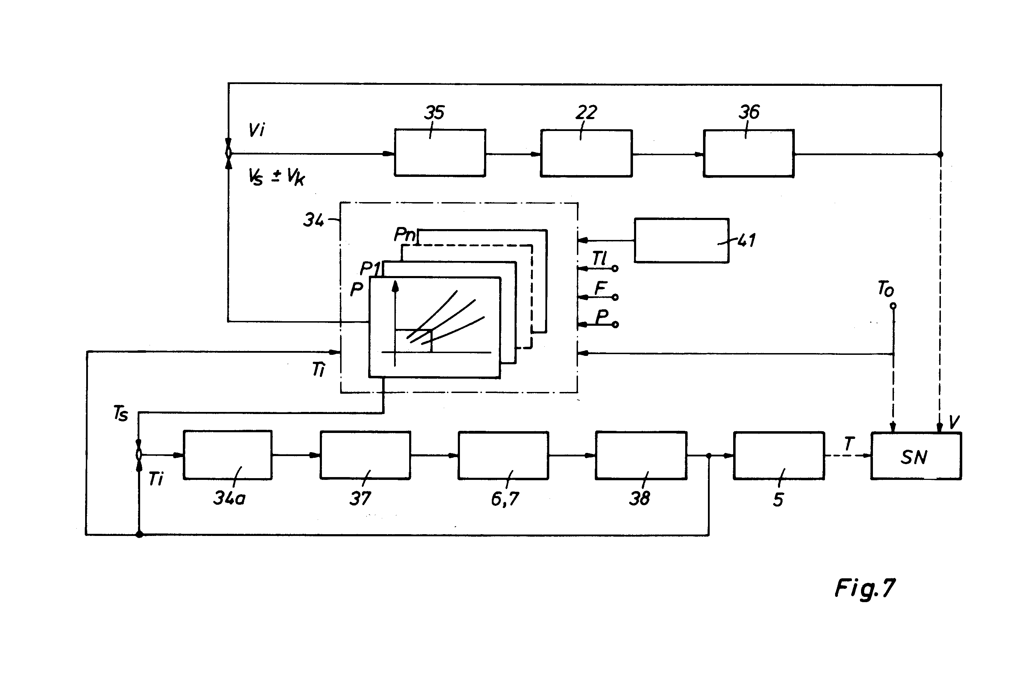

Bei der in Fig. 7 dargestellten, stärker automatisierten Ausbaustufe des Regelungssystems wird nach dem Einführen der vorderen Kanten der sich überlappenden Folienbahnabschnitte in die Schweißmaschine mit Hilfe der Thermofühler 43, 44 die Ausgangstemperatur To der Folienbahnen F1, F2 gemessen und von beiden Meßergebnissen im Rechner 34 der Mittelwert gebildet. (In einer nachstehend erläuterten Ausführungsform können die Ausgangstemperaturen To der beiden Folienbahnen F1, F2 auch signalmäßig getrennt weiterverarbeitet werden.) Desweiteren wird mit Hilfe des Thermofühlers 49 die Lufttemperatur T1 und durch die Sensoren 52, 53 und 58 zum einen der Feuchtigkeitsgrad F an der Innenseite der sich überlappenden Folienabschnitte und zum anderen der mit Hilfe des Andruckmechanismus 15 eingestellte Schweißdruck P ermittelt und dem Rechner 34 zugeführt. Schließlich wird über die Tastatur 41 dem Rechner 34 je eine die Art und die Dicke der zu verschweißenden Folienbahnen F1, F2 charakterisierende Kennzahl sowie die Höhe des Sollwertes Vs der Vorschubgeschwindigkeit V eingegeben.

Die Temperaturregelung und die Vorschubregelung sind innerhalb des Rechners 34 über ein symbolisch als Diagramm dargestelltes Kennlinienfeld miteinander verknüpft, wobei gemäß dem zugeordneten Diagramm in Fig. 10 für verschiedene Werte von To entsprechende Kennlinien festgelegt sind, die mit To1 bis Ton bezeichnet sind. Für verschiedene Werte der für den Schweißvorgang relevanten Parameter, z. B. des Schweißdruckes P sind eine entsprechende Anzahl von Kennlinienfeldern in einem ROM des Rechners 34 abgelegt.

Der Rechner 34 wählt nun anhand des gemessenen Wertes von To, bei dem es sich z. B. um den Wert To2 handelt, und der übrigen gemessenen und eingegebenen Parameter einen passenden Sollwert Ts der Schweißtemperatur T, der dem Summierpunkt der Temperaturregelung zugeführt wird.

So lange die Ausgangstemperatur To der Folienbahnen F1, F2 konstant bleibt, werden auftretende Regeldifferenzen zwischen Ti und Ts in der gleichen Weise, wie vorstehend bezüglich der Figuren 6 und 9 beschrieben, durch die Temperaturregelung ausgeregelt.

Sobald jedoch die Thermofühler 43, 44 z. B. ein Absinken der Ausgangstemperatur To von To2 auf z. B. To1 feststellen, wählt der Rechner 34 innerhalb des Kennlinienfeldes unter Beibehaltung des eingangs festgelegten Sollwertes Vs der Vorschubgeschwindigkeit V einen auf die tiefere Ausgangstemperatur To1 angepaßten höheren Sollwert Ts' der Schweißtemperatur T, durch den der für das Aufheizen der kälteren Folienabschnitte erhöhte Wärmebedarf gedeckt wird. Mit der Auswahl eines neuen Sollwertes Ts' werden vom Rechner 34 auch hierzu passende neue Grenzwerte Tvo' und Tvu' für den bevorzugten Temperaturbereich Bv' und neue Grenzwerte Tzo' und Tzu' für den noch zulässigen Temperaturbereich Bz' festgelegt.

Durch die unmittelbar nach der Feststellung einer Änderung der Ausgangstemperatur To durchgeführte Auswahl des neuen Sollwertes Ts' tritt bei unverändertem Istwert Ti am Summierpunkt eine Regeldifferenz auf, die zu einer entsprechenden Reaktion der Temperaturregelung führt und bewirkt, daß der Heizkeil 5 unmittelbar danach stärker aufgeheizt wird. Sofern der Temperatursprung von To2 nach To1 nicht zu groß ist, kann der Heizkeil 5 zu dem Zeitpunkt, zu dem ihn die kälteren Folienabschnitte erreichen, bereits auf die für die Lieferung der erhöhten Wärmemenge erforderliche erhöhte Temperatur aufgeheizt sein, so daß danach am Heizkeil 5 kein zu großer Wärmeabfluß stattfindet, der anderenfalls wie beim zuvor beschriebenen Verfahren gemäß den Figuren 6 und 9 zu einer erhöhten Regeldifferenz führen würde. Auf diese Weise wird vermieden, daß schon bei mittelgroßen Änderungen der Ausgangstemperatur To der Folienbahnen F1, F2 der Istwert Ti die Grenzwerte Tvo und Tvu bzw. Tvo' und Tvu' des bevorzugten Temperaturbereiches Bv bzw Bv' über- oder unterschreitet und danach die Vorschubgeschwindigkeit V der Schweißmaschine in entsprechender Weise verändert werden muß.

Erst bei größeren Sprüngen der Ausgangstemperatur To kann es vorkommen, daß wegen der systembedingten Trägheit einer Heizungsregelung der Heizkeil 5 nicht rasch genug auf den neuen Sollwert Ts' aufgeheizt bzw. abgekühlt werden kann, so daß in diesem Fall kurzzeitig die Vorschubgeschwindigkeit V der Schweißmaschine entsprechend erhöht oder abgesenkt werden muß, so wie es bei dem zuvor beschriebenen Verfahren gemäß den Figuren 6 und 9 durchgeführt wird.

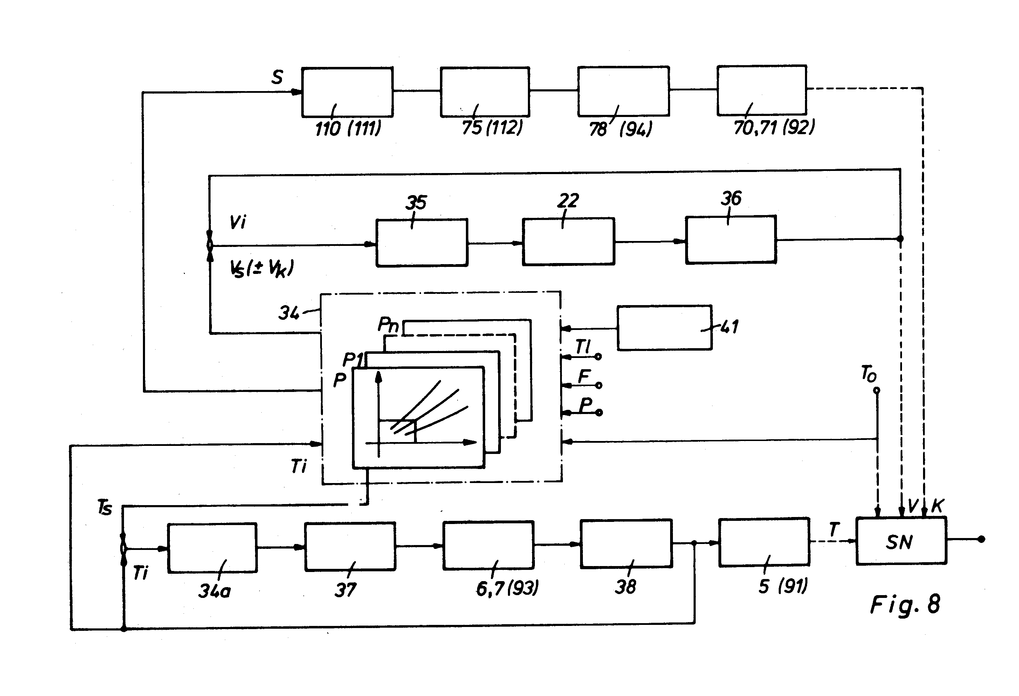

Die beiden Ausführungsbeispiele nach den Figuren 3 und 4 sind gemäß Fig. 8 schaltungsgemäß mit dem in Fig. 7 dargestellten Regelungssystem verbunden, jedoch wäre auch eine Verbindung mit dem Regelungssystem nach Fig. 6 möglich. Bei Auftreten einer Regeldifferenz zwischen dem Istwert Ti und dem Sollwert Ts kann entweder unmittelbar ohne Zeitverzögerung oder nach Über- bzw. Unterschreiten von festzulegenden Grenzwerten, die zwischen den Grenzwerten Tvo und Tvu des bevorzugten Temperaturbereiches Bv liegen sollten, vom Rechner 34 ein Steuersignal S ausgegeben werden, das über eine Steuerschaltung 110 die beim Ausführungsbeispiel gemäß Fig. 3 als Stellglieder dienenden Schrittmotoren 75 beaufschlagt und damit bewirkt, daß die Andruckrollen 78 mehr oder weniger dicht an den Heizkeil 5 bewegt werden.

Die obere der in Fig. 3 dargestellten Andruckrollen 78 steht in der dem Heizkeil 5 nächstgelegenen Stellung, in der sie den zugeordneten Folienabschnitt in größtmöglichen Kontakt mit dem Heizkeil 5 hält und in der dieser daher wegen der großen Berührungsfläche bei vorgegebener Vorschubgeschwindigkeit und Heizkeiltemperatur die größtmögliche Wärmemenge an den Folienabschnitt übertragen kann. Demgegenüber hat die untere der in Fig. 3 dargestellten Andruckrollen 78 den größtmöglichen Abstand zum Heizkeil 5, wodurch der zugeordnete untere Folienabschnitt in kleinstmöglichem Kontakt mit dem Heizkeil 5 steht. Aufgrund der kleinen Berührungsfläche kann der Heizkeil 5 in diesem Fall nur eine vergleichsweise geringe Wärmemenge auf diesen Folienabschnitt übertragen.

Durch das Steuersignal S werden die Schrittmotoren 75 gleichmäßig beaufschlagt und dadurch beide Andruckrollen 78 bei zu hohem Istwert Ti in eine vom Heizkeil 5 weiter entfernte und bei zu niedrigem Istwert Ti in einem dem Heizkeil 5 nähergelegene Stellung bewegt, so daß durch die Veränderung der wirksamen Kontaktfläche des Heizkeiles 5 die Temperaturregelung unterstützt und somit schneller eine Regeldifferenz ausgeglichen wird.

Beim Ausführungsbeispiel gemäß Fig. 4 wird das beim Auftreten einer Regeldifferenz zwischen dem Istwert Ti und dem Sollwert Ts vom Rechner 34 ausgegebene Steuersignal S einer Steuerschaltung 111 zugeführt, die über ein als Stellglied dienendes Halbleiterrelais 112 mit der Heizpatrone 94 des Vorwärmers 92 verbunden ist. Je nach dem Vorzeichen und der Größe der Regeldifferenz wird nun der Heizpatrone 94 des Vorwärmers 92 von einer mittleren Energiezufuhr ausgehend entweder mehr oder weniger elektrische Energie zugeführt und damit der Vorwärmer 92 stärker oder schwächer aufgeheizt. Durch die unterschiedliche Beaufschlagung des Vorwärmers 92 ist ein Abschnitt der mit den zu verschweißenden Folienabschnitten in Berührung tretenden wirksamen Kontaktfläche des Schweißwerkzeuges 90 veränderbar, wodurch die Wirkung der auf die Regeldifferenz reagierenden Temperaturregelung unterstützt und somit schneller die Regeldifferenz ausgeglichen wird.

Das im Blockschaltbild gemäß Fig. 8 dargestellte, mit SN bezeichnete Blocksymbol kennzeichnet den Einfluß der im Heizkeil 5 bzw. 91 gemessenen Schweißtemperatur T, der Vorschubgeschwindigkeit V, der Veränderung der wirksamen Größe der Kontaktfläche des Schweißwerkzeuges 5 bzw. 90 und der als Störgröße auftretenden Ausgangstemperatur To der Folienbahnen F1, F2 auf die Qualität der Schweißnaht.

Die Auswirkung der von der Regeldifferenz abhängigen Veränderung der wirksamen Kontaktfläche des Schweißwerkzeuges 5 bzw. 90 gemäß den Ausführungsbeispielen der Figuren 3 und 4 wird in dem in Fig. 12 dargestellten Diagramm veranschaulicht. Unter der Annahme, daß in diesem Fall die gleichen Schweißbedingungen herrschen wie beim Diagramm nach Fig. 11 ergibt sich wegen der Unterstützung der Temperaturregelung durch die Veränderung der wirksamen Kontaktfläche des Schweißwerkzeuges 5 bzw. 90 für den Istwert Ti ein flacherer Kurvenverlauf als im Diagramm nach Fig. 11, so daß nur noch in Extremfällen der Istwert Ti die Grenzwerte Tvo oder Tvu des bevorzugten Temperaturbereiches Bv über- oder unterschreitet und demzufolge nur noch selten eine Veränderung der Vorschubgeschwindigkeit V erforderlich ist und dabei auch nur in vergleichsweise geringem Ausmaß. In Fig. 12 zeigt die mittlere Kurve den zeitlichen Verlauf des vom Rechner 34 ausgegebenen Steuersignals S, das dem Vorzeichen der Regeldifferenz zwischen dem Istwert Ti und dem Sollwert Ts entgegengesetzt ist. Das Steuersignal S kann innerhalb eines durch eine obere und eine untere Grenze So bzw. Su festgelegten Steuerbereiches variieren, bei dem es sich beim Ausführungsbeispiel nach Fig. 3 um den maximalen Verstellweg der Andruckrollen 78 und beim Ausführungsbeispiel nach Fig. 4 um den maximalen Stellbereich des Halbleiterrelais 112 handelt.

In einer alternativen Ausführung könnte bei Verwendung der Ausführungsbeispiele gemäß den Fig. 3 und 4 auf die Verknüpfung der Temperaturregelung mit der Vorschubregelung verzichtet werden, wobei eine Regeldifferenz zwischen dem Istwert Ti und dem Sollwert Ts allein durch die Temperaturregelung und die Änderung der wirksamen Größe der Kontaktfläche des Schweißwerkzeuges 5 bzw. 90 ausgeglichen würde. In diesem Fall würde bei dem Blockschaltbild nach Fig. 8 der Rechner 34 lediglich den vor Schweißbeginn ausgewählten Sollwert Vs der Vorschubgeschwindigkeit jedoch keinen Vorschubkorrekturwert abgeben.

Bei dem gemäß Fig. 5 ausgebildeten Heizkeil 100 kann jede der beiden Reihen von Heizpatronen 101, 102 und 103, 104 unabhängig voneinander unterschiedlich beaufschlagt werden. Auf diese Weise kann bei einem Unterschied der Ausgangstemperatur To des oberen Folienabschnittes gegenüber der Ausgangstemperatur To des unteren Folienabschnittes durch entsprechende unterschiedliche Aufheizung der Heizpatronen 101, 102 und 103, 104 der oberen und unteren Hälfte des Heizkeiles 100 ein der Ausgangstemperatur To des jeweiligen Folienabschnittes angepaßter Sollwert zugeordnet werden, so daß jedem Folienabschnitt die für eine optimale Verschweißung erforderliche Wärmemenge zugeführt werden kann.

Ein ähnliches Ergebnis läßt sich auch bei dem Ausführungsbeispiel nach Fig. 3 erzielen, indem die Schrittmotoren 75 unabhängig voneinander beaufschlagt werden und die Andruckrollen 78 entsprechend der jeweiligen Ausgangstemperatur To der zugeordneten Folienabschnitte mehr oder weniger weit auf die zugeordnete Kontaktfläche des Heizkeiles 5 zubewegt und dementsprechend die Folienabschnitte in verstärkten oder verminderten Kontakt mit dem Heizkeil 5 gebracht werden.

## Patentansprüche

1. Verfahren zur Durchführung eines mit Hilfe einer Schweißmaschine zu bewerkstelligenden Schweißvorganges beim Verbinden von thermoplastischen Materialbahnen, bei dem die Schweißtemperatur und die Geschwindigkeit der eine Relativbewegung zwischen den Material bahnen und der Schweißmaschine bewirkenden Druck- bzw. Laufrollen regelbar ist, dadurch gekennzeichnet, daß die Temperaturregelung mit der Geschwindigkeitsregelung derart signalmäßig verbunden ist, daß der Istwert (Ti) der Schweißtemperatur (T) zur Bildung einer Führungsgröße für die Geschwindigkeitsregelung verwendet wird, indem bei einem Anwachsen des Istwertes (Ti) über den Sollwert (Ts) der Schweißtemperatur (T) der Sollwert (Vs) der Geschwindigkeit (V) angehoben und bei einem Absinken des Istwertes (Ti) der Schweißtemperatur (T) unter deren Sollwert (Ts) der Sollwert (Vs) der Geschwindigkeit (V) abgesenkt wird.

2. Verfahren nach Anspruch 1, dadurch gekennzeichnet, daß für den Istwert (Ti) der Schweißtemperatur (T) beiderseits des Sollwertes (Ts) der Schweißtemperatur (T) ein bevorzugter Temperaturbereich (Bv) mit einem oberen Grenzwert (Tvo) und einem unteren Grenzwert (Tvu) und beiderseits des bevorzugten Temperaturbereiches (Bv) ein noch zulässiger Temperaturbereich (Bz) mit einem oberen Grenzwert (Tzo) und einem unteren Grenzwert (Tzu) festlegbar ist und daß erst beim Überschreiten des oberen Grenzwertes (Tvo) des bevorzugten Temperaturbereiches (Bv) bzw. Unterschreiten des unteren Grenzwertes (Tvu) dieses Temperaturbereiches (Bv) der Sollwert (Vs) der Geschwindigkeit (V) entsprechend der Größe und dem Vorzeichen der jeweiligen Regeldifferenz zwischen dem Istwert (Ti) und dem Sollwert (Ts) der Schweißtemperatur (T) verändert wird und beim Überschreiten des oberen Grenzwertes (Tzo) des noch zulässigen Temperaturbereiches (Bz) bzw. beim Unterschreiten des unteren Grenzwertes (Tzu) dieses Temperaturbereiches (Bz) ein Alarmsignal ausgelöst und/oder der Schweißvorgang unterbrochen wird.

3. Verfahren nach Anspruch 1 oder 2, dadurch gekennzeichnet, daß die Verbindung der beiden Regelkreise über ein in einem Rechner algorithmisch oder tabellarisch realisiertes Kennfeld erfolgt, dem die Bedingung zugrundeliegt, daß die im Schweißspalt herrschende Temperatur zumindest bei Änderung des Parameters Ausgangstemperatur (To) der Materialbahnen im wesentlichen konstant ist.

4. Verfahren nach einem oder mehreren der Ansprüche 1 bis 3, bei dem die Schweißwärme über ein Schweißwerkzeug, z. B. einen Heizkeil, auf die Materialbahnen übertragen wird, dadurch gekennzeichnet, daß die Regelgröße Schweißtemperatur (T) von der Temperatur des Heizelementes des Schweißwerkzeuges gebildet wird.

5. Verfahren nach einem oder mehreren der Ansprüche 1 bis 4, dadurch gekennzeichnet, daß fortwährend der Gradient der Schweißtemperatur (T) ermittelt und die Stellgröße für die Heizung und bei Änderung des Sollwertes (Vs) der Geschwindigkeit (V) die Stellgröße für die Antriebsvorrichtung der Druck- bzw. Laufrollen in Abhängigkeit vom Temperaturgradient geändert wird.

6. Verfahren nach einem oder mehreren der Ansprüche 1 bis 5, dadurch gekennzeichnet, daß während des Schweißvorganges zumindest periodisch die Ausgangstemperatur (To) der Materialbahnen vor der Schweißstelle ermittelt und dem dem Kennfeld zugeordneten Rechner zugeführt wird und daß dieser bei Änderung der Ausgangstemperatur (To) bei konstant belassenem Sollwert (Vs) der Geschwindigkeit (V) einen der jeweiligen Ausgangstemperatur (To) zugeordneten neuen Sollwert (Ts') der Schweißtemperatur (T) mit hierzu entsprechend angepaßten Grenzwerten (Tvo' und Tvu') für den bevorzugten Temperaturbereich (Bv') und Grenzwerten (Tzo' und Tzu') für den noch zulässigen Temperaturbereich (Bz') festlegt.

7. Verfahren nach Anspruch 6, dadurch gekennzeichnet, daß vor Beginn eines Schweißvorganges die Ausgangstemperatur To der Material bahnen ermittelt und dem dem Kennfeld zugeordneten Rechner zugeführt wird und daß dieser anhand dieses Meßergebnisses, nach Festlegung eines bevorzugten Sollwertes (Vs) der Geschwindigkeit (V) sowie unter Berücksichtigung weiterer Parameter (z. B. Materialart, Dikke der Bahnen, Schweißdruck) einen hierzu passenden, wenigstens für den Beginn des Schweißvorganges geltenden Sollwert (Ts) der Schweißtemperatur (T) auswählt.

8. Verfahren nach Anspruch 6 oder 7, dadurch gekennzeichnet, daß die Ausgangstemperatur (To) einer jeden der beiden Material bahnen getrennt signalmäßig verarbeitet und für jede Materialbahn ein dem jeweiligen Meßwert entsprechender Sollwert (Ts) der Schweißtemperatur (T) ausgewählt wird.

9. Verfahren nach einem oder mehreren der Ansprüche 1 bis 8, bei dem die Schweißwärme über ein Schweißwerkzeug, z. B. einen Heizkeil, auf die Materialbahnen übertragen wird, dadurch gekennzeichnet, daß zusätzlich zur Regelung der Schweißtemperatur und der Geschwindigkeitsregelung eine Änderung der wirksamen Größe der Kontaktfläche des Schweißwerkzeuges mit den Material bahnen durchgeführt wird, indem vor dem Überschreiten der Grenzwerte (Tvo und Tvu) des bevorzugten Temperaturbereiches (Bv) die wirksame Größe der Kontaktfläche des Schweißwerkzeuges entsprechend der Größe und dem Vorzeichen der jeweiligen Regeldifferenz zwischen dem Istwert (Ti) und dem Sollwert (Ts) der Schweißtemperatur (T) vergrößert oder verkleinert wird.

10. Verfahren nach Anspruch 9, dadurch gekennzeichnet, daß die wirksame Größe der Kontaktfläche durch unterschiedliches Andrücken oder Entfernen der Material bahnen an das bzw. von dem Schweißwerkzeug veränderbar ist.

11. Verfahren nach Anspruch 9, dadurch gekennzeichnet, daß die wirksame Größe der Kontaktfläche durch unterschiedlich beheizbare Abschnitte des Schweißwerkzeuges veränderbar ist.

12. Verfahren nach dem Oberbegriff des Anspruches 9, dadurch gekennzeichnet, daß zusätzlich zur Regelung der Schweißtemperatur am Heizkeil und der Geschwindigkeitsregelung eine Regelung oder Steuerung der Temperatur eines dem Heizkeil vorgelagerten Vorwärmers durchgeführt wird.

13. Verfahren zur Durchführung eines mit Hilfe einer mit einem beheizbaren Schweißwerkzeug ausgestatteten Schweißmaschine zu bewerkstelligenden Schweißvorganges beim Verbinden von thermoplastischen Materialbahnen, bei dem zumindest die Schweißtemperatur regelbar ist, dadurch gekennzeichnet, daß zur Unterstützung der Temperaturregelung die wirksame Kontaktfläche des Schweißwerkzeuges mit den Materialbahnen in Abhängigkeit von der Differenz zwischen dem Istwert (Ti) der Schweißtemperatur (T) und deren Sollwert (Ts) veränderbar ist.

14. Maschine zur Durchführung des Verfahrens nach Anspruch 1, mit einem die Schweißwärme erzeugenden Schweißteil und eine Relativbewegung zwischen den Materialbahnen und der Schweißmaschine bewirkenden, über einen Motor antreibbaren Druck- bzw. Laufrollen, sowie mit einer Temperaturregelung für den Schweißteil und einer Geschwindigkeitsregelung für den Motor, dadurch gekennzeichnet, daß die Temperaturregelung (34a, 37) und Geschwindigkeitsregelung (35) über einen Rechner (34) miteinander verknüpft sind.

15. Maschine nach Anspruch 14, bei der das Schweißteil von einem Heizkeil gebildet ist, der wenigstens eine elektrisch heizbare Patrone aufweist, dadurch gekennzeichnet, daß zur Ermittlung der die Regelgröße bildenden Schweißtemperatur (T) im Bereich der heizbaren Patrone (6, 7) ein Thermofühler (38) angeordnet ist.

16. Maschine nach Anspruch 15, bei der dem Heizkeil zum Andrücken der beiden miteinander zu verschweißenden Abschnitte der Materialbahnen je ein Andruckmechanismus zugeordnet ist, dadurch gekennzeichnet, daß zur Veränderung der wirksamen Kontaktfläche des Heizkeiles (5) mit den Materialbahnen (F1, F2) jeder Andruckmechanismus (70, 71) ein mit Hilfe eines steuerbaren Stellmittels (75) in seiner Entfernung zum Heizkeil (5) verstellbares Andruckmittel (72, 78) aufweist.

17. Maschine nach Anspruch 16, dadurch gekennzeichnet, daß die Stellmittel (75) durch den Rechner (34) gemeinsam oder unabhängig voneinander steuerbar sind.

18. Maschine nach Anspruch 16 oder 17, dadurch gekennzeichnet, daß das verstellbare Andruckmittel von einer auf einem Hebel (72) angeordneten Andruckrolle (78) und das Stellmittel von einem Schrittmotor (75) gebildet ist, der über eine Gewindespindel (76) mit einer am Hebel (72) angeordneten Gewindehülse (77) verbunden ist.

19. Maschine nach dem Oberbegriff des Anspruches 15, dadurch gekennzeichnet, daß dem Heizkeil (91) ein mit wenigstens einer elektrisch heizbaren Patrone (94) versehener Vorwärmer (92) vorgelagert ist, der unabhängig vom Heizkeil (91) betreibbar ist.

20. Maschine nach einem oder mehreren der Ansprüche 15 bis 19, dadurch gekennzeichnet, daß den beiden Kontaktflächen des Heizkeiles (100) mit den Materialbahnen (F1, F2) jeweils wenigstens eine elektrisch heizbare Patrone (101; 102 bzw. 103; 104) zugeordnet ist und daß die Patronen (101; 102 bzw. 103; 104) unabhängig voneinander beaufschlagbar sind.

Fig. 1

Fig. 2

Fig. 3

Fig. 4

Fig. 5

Fig. 6

Fig.7

Fig. 8

Fig. 9

Fig. 10

Fig.11

Fig.12